Europäisches Patentamt

European Patent Office

Office européen des brevets

(19)

(11) **EP 1 610 303 A1**

(12) **EUROPEAN PATENT APPLICATION**

(43) Date of publication:
**28.12.2005 Bulletin 2005/52**

(51) Int Cl.7: **G11B 5/86**

(21) Application number: **05012868.5**

(22) Date of filing: **15.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **15.06.2004 JP 2004176885**

(71) Applicant: **FUJI PHOTO FILM CO., LTD**
**Kanagawa-ken (JP)**

(72) Inventors:
• **Nagao, Makoto**
  **Odawara-shi, Kanagawa-ken (JP)**
• **Yasunaga, Tadashi**
  **Odawara-shi, Kanagawa-ken (JP)**
• **Sugita, Ryuji**
  **Hitachi-shi, Ibaraki-ken (JP)**

(74) Representative: **HOFFMANN EITLE**
**Patent- und Rechtsanwälte**
**Arabellastrasse 4**
**81925 München (DE)**

(54) **Process for producing magnetic recording medium with limited coercivity squareness ratio**

(57) A magnetic recording medium containing a magnetic recording layer (22) with a coercivity squareness ratio of 0.4 to 0.9 is produced by magnetic transfer, for which a magnetic field is applied to an unrecorded magnetic recording medium while maintaining a patterned side of the patterned master medium (3) in close contact with the magnetic recording layer (22) for magnetic transfer. At least portions of the patterned side are made of a soft-magnetic material, and the pattern formed on the patterned side has a bit length of 60 nm or smaller. It is possible to arrange the magnetic recording layer (22) to have a coercive force of 398 kA/m or greater, reduce the bit length to 55 nm or smaller, and heat the magnetic recording layer (22) to 100°C or higher during application of the magnetic field.

FIG.2B

FIG.2C

EP 1 610 303 A1

**Description**

BACKGROUND OF THE INVENTION

Field of the Invention

The present invention relates to a magnetic recording medium in which a magnetic pattern is formed at high density by magnetic transfer. In addition, the present invention also relates to a process for producing the magnetic recording medium, and to a magnetic reproduction system using the magnetic recording medium.

Description of the Related Art

Recently, various attempts have been made to increase the recording densities in the magnetic recording mediums. In the current magnetic recording mediums, information recording regions are constituted by narrow tracks. Therefore, the so-called tracking servo technique plays an important role in accurately scanning the narrow tracks with a magnetic head and reproducing signals with high S/N ratios.

In the tracking servo technique, it is necessary to record in advance servo information as preformatted information in each magnetic recording medium, where the servo information includes servo signals for determining a track position, an address signal of a track, a reproduction clock signal, and the like. Currently, the magnetic recording mediums are preformatted by using a dedicated servo recording device (e.g., a servo track writer). However, in the conventional servo recording device, each magnetic recording medium is required to be preformatted by using a magnetic head. Therefore, it takes much time to perform the preformatting, and it is impossible to achieve satisfactory production efficiency.

In order to overcome the above problem, a technique for forming a magnetic pattern in a magnetic recording medium is proposed, for example, in Japanese Unexamined Patent Publication No. 2001-297429. According to this technique, the magnetic pattern is formed by irradiating the magnetic recording medium with an energetic beam through a masking means, and then applying an external magnetic field to the magnetic recording medium so as to realize magnetization inversion in the regions the temperature of which is raised.

On the other hand, a magnetic transfer method for recording a magnetic pattern corresponding to information carried by a microrelief or microrecess pattern formed on a patterned master medium, in a magnetic recording layer of a magnetic recording medium (as a slave medium) by holding the magnetic recording medium in close contact with the patterned master medium, and applying to the magnetic recording medium a magnetic field for magnetic transfer. This method is disclosed, for example, in Japanese Unexamined Patent Publication No. 2003-228829. According to this method, the preformatted information can be statically recorded in a very short time without changing the relative position between the magnetic recording medium and the patterned master medium.

Incidentally, in the case where high-density recording is performed in a magnetic recording medium as mentioned above, it is necessary to reduce the spacing loss so as to clearly record even a very small bit. Generally, the spacing loss L is expressed as

$$L = -K \times d/\lambda,$$

where K is a spacing loss factor, d is the spacing, and $\lambda$ is the wavelength (corresponding to twice the size of a bit). In the case
where the spacing loss factor K is small, the influence of the spacing d can be suppressed so that characteristics for forming a satisfactory magnetic pattern can be ensured even when the spacing d is great.

However, according to the technique disclosed in Japanese Unexamined Patent Publication No. 2001-297429, the spacing loss is great. Therefore, it is difficult to form a magnetic pattern in magnetic recording layers which have a great coercive force as required for formation of a very small bit.

On the other hand, the present inventors have found that the spacing loss can be reduced in the case where the magnetic pattern is formed by using the magnetic transfer technique disclosed in Japanese Unexamined Patent Publication No. 2003-228829.

SUMMARY OF THE INVENTION

The present invention has been developed in view of the above circumstances.

A first object of the present invention is to provide a magnetic recording medium in which a magnetic pattern constituted by very small bits can be recorded by magnetic transfer with reduced spacing loss so as to realize high density recording.

A second object of the present invention is to provide a process for producing the above magnetic recording medium.

A third object of the present invention is to provide a magnetic reproduction system using the above magnetic recording medium.

    (I) In order to accomplish the aforementioned first object, the first aspect of the present invention is provided. According to the first aspect of the present invention, there is provided a magnetic recording medium containing a magnetic recording layer which has a coercivity squareness ratio Hc* of 0.4 to 0.9 (preferably 0.6 to 0.8). In the magnetic recording layer, a magnetic pattern is recorded through a process including the steps of: (a) holding the magnetic recording medium and a patterned master medium having a patterned side on which an original pattern corresponding to the magnetic pattern is formed, in such a manner that portions of the patterned side which constitute the original pattern are in close contact with the magnetic recording layer, where the portions of the patterned side are made of a soft-magnetic material, and the original pattern has a bit length of 60 nm or smaller; and (b) applying to the unrecorded magnetic recording medium a magnetic field for magnetic transfer of the original pattern to the magnetic recording layer so as to record the magnetic pattern in the magnetic recording layer.

The coercivity squareness ratio Hc* is defined as a gradient of a magnetization curve at the point at which the remanent magnetization is zero and the coercive force is Hc, where the magnetization curve is plotted with the ordinate corresponding to the magnetization strength and the abscissa corresponding to the magnetizing force. For example, the coercivity squareness ratio Hc* is equal to one when the magnetization curve at the above point is parallel to the ordinate and perpendicular to the abscissa, and smaller than one when the magnetization curve is inclined.

The patterned master medium may be either of: a first type of medium in which a relief or recess pattern constituted by protrusions (or unrecessed portions) is formed as the original pattern on the patterned side, and at least tops of the protrusions (or unrecessed portions) are formed of a soft-magnetic material; and a second type of medium in which the original pattern is formed of a soft-magnetic material in the patterned side in such a manner that the original pattern is not projected or recessed from the other areas of the patterned side. Specifically, the magnetic recording medium may be constituted by: (1) only a substrate of a soft-magnetic material in which a relief or recess pattern is formed on a surface of the substrate (as the patterned side) ; or (2) a substrate in which a relief or recess pattern corresponding to the patterned information is formed on a surface of the substrate (as the patterned side), and a soft-magnetic layer formed on protrusions (or unrecessed portions) constituting the relief or recess pattern; or (3) a nonmagnetic substrate in which a relief or recess pattern corresponding to the patterned information is formed on a surface of the substrate (as the patterned side) , and a soft-magnetic layer with which recessed portions constituting the relief or recess pattern are filled.

According to the first aspect of the present invention, it is possible to form a magnetic pattern in the magnetic recording layer with reduced spacing loss, and clearly transfer very small bits to the magnetic recording medium.

Preferably, the magnetic recording medium according to the first aspect of the present invention may also have one or a combination of the following additional features (i) and (ii).

(i) The magnetic recording layer has a coercive force Hc of 239 kA/m ($\approx$3,000 Oe) or greater.
(ii) The process according to the first aspect of the present invention may further comprise a protection layer which has a thickness of 3 nm or greater, and formed on a surface of the magnetic recording layer.

(II) In order to accomplish the aforementioned second obj ect, the second aspect of the present invention is provided. According to the second aspect of the present invention, there is provided a process for producing a magnetic recording medium in which patterned information is recorded, comprising the steps of: (a) holding an unrecorded magnetic recording medium containing a magnetic recording layer and a patterned master medium having a surface on which a relief or recess pattern constituted by protrusions is formed with a bit length of 55 nm or smaller for magnetic transfer, in such a manner that the protrusions are in close contact with the magnetic recording layer; (b) heating the magnetic recording layer to 100°C or higher; and (c) applying to the unrecorded magnetic recording medium a magnetic field for magnetic transfer of the patterned information to the magnetic recording layer, while maintaining the magnetic recording layer at 100°C or higher and holding the unrecorded magnetic recording medium and the patterned master medium in such a manner that the protrusions are in close contact with the magnetic recording layer. The magnetic recording layer has a coercivity squareness ratio of 0.4 to 0.9 (preferably 0.6 to 0.8) and a coercive force of 398 kA/m ($\approx$5,000 Oe) or greater, and at least tops of the protrusions are formed of a soft-magnetic material.

According to the second aspect of the present invention, it is possible to form a magnetic pattern which has reduced spacing loss and produces reduced noise, and produce a high-density magnetic recording medium which remarkably reduces noise.

Preferably, the process according to the second aspect of the present invention may also have one or a combination of the aforementioned additional feature (ii) and the following additional feature (iii).

(iii) The process according to the second aspect of the present invention may further comprise the step of (al) performing initial magnetization of the magnetic recording layer in such a manner that the magnetic recording layer is DC magnetized in a direction along a track, and the magnetic field applied in the step (c) is directed approximately opposite to the direction of the initial magnetization so that the initial magnetization in first portions of the magnetic recording layer is inverted, and the patterned information is recorded in the magnetic recording layer. as a magnetic pattern, where the first portions of the magnetic recording layer are located between second portions of the magnetic recording layer at which the magnetic recording layer is in close contact with the protrusions constituting the relief or recess pattern.

(III) In order to accomplish the aforementioned second obj ect, the third aspect of the present invention is provided. According to the third aspect of the present invention, there is provided a process for producing a magnetic recording medium in which patterned information is recorded. The process comprises the steps of: (a) preparing an unrecorded magnetic recording medium which contains a magnetic recording layer; (b) heating the magnetic recording layer to 100°C or higher; and (c) after heating the magnetic recording layer in the step (b), applying a magnetic field for magnetic transfer of the patterned information to the magnetic recording layer, to the unrecorded magnetic recording medium while holding the unrecorded magnetic recording medium and a patterned master medium which has a surface on which a relief or recess pattern constituted by protrusions is formed with a bit length of 55 nm or smaller, in such a manner that the protrusions are in close contact with the magnetic recording layer. The magnetic recording layer has a coercivity squareness ratio Hc* of 0.4 to 0.9 and a coercive force Hc of 398 kA/m or greater, and at least tops of the protrusions are formed of a soft-magnetic material.

Preferably, the process according to the third aspect of the present invention may also have one or a combination of the following additional feature (iv) and the aforementioned additional feature (iii).

(iv) The first portions of the magnetic recording layer in which magnetization inversion occurs are at higher temperature than the second portions of the magnetic recording layer in which magnetization inversion does not occur.

(IV) In order to accomplish the aforementioned third object, the fourth aspect of the present invention is provided. According to the fourth aspect of the present invention, there is provided a magnetic reproduction system which is characterized in that the magnetic recording medium according to the first aspect of the present invention is used as a read-only medium.

(V) The advantages of the present invention are as follows.

(a) The present inventors have found that it is necessary to control the coercivity squareness ratio Hc* in the range of 0.4 to 0. 9, and preferably 0. 6 to 0.8, in order to realize precise magnetic transfer of very small bits in a high-density magnetic recording medium without influence of the spacing loss.

(b) The transferability of very small bits differs depending on the static magnetic characteristics of magnetic recording mediums. Specifically, very small bits can be transferred with higher clarity when the coercivity squareness ratio Hc* is greater, i.e., closer to one. For example, although the spacing loss factor K is about 50 in the recording using a magnetic head, the spacing loss factor K is about 20 in the recording using magnetic transfer. That is, the recording characteristics are improved by use of the magnetic transfer. However, when the coercivity squareness ratio Hc* is greater than 0.9, the coupling between magnetic columns in the microstructure of a magnetic recording medium becomes great, and therefore such a magnetic recording medium is not suitable for recording very small bits.

(c) In the case where the coercive force Hc of the magnetic recording layer is low, magnetic recording, i.e., magnetic transfer, is easy. However, in this case, the boundaries between bits become unclear, the bits are blurred, and noise increases. On the other hand, in the case where the coercive force Hc of the magnetic recording layer is high, the boundaries between bits become clear, and therefore the high coercive force Hc is suitable for recording very small bits. However, since a high magnetic field is required for magnetic recording, the magnetic transfer enables magnetic recording using a high coercive force.

Further, when the coercive force Hc is great, the magnetization inversion does not easily occur, and imperfect transfer is likely to occur. However, according to the second and third aspects of the present invention, the magnetic recording medium is heated to 100°C or higher so as to lower the coercive force Hc of the heated portion and facilitate the magnetization inversion, and therefore the magnetic transfer of very small bits to a high-coercive-force magnetic recording medium becomes easy.

(d) In the case where a protection layer is formed on the magnetic recording layer of the magnetic recording medium, and a lubricant is applied to the protection layer when necessary, the durability and weatherability of the magnetic recording medium are improved.

(e) Since the magnetic recording medium according to the present invention is a high-coercive-force magnetic recording medium containing the magnetic recording layer with a high coercive force, it is possible to perform magnetic transfer from the high-coercive-force magnetic recording medium to a magnetic recording medium having a normal coercive force. That is, a plurality of patterned master mediums for the conventional magnetic transfer can be obtained from a single patterned master medium used in the processes according to the present invention, and information can be magnetically transferred from each of the plurality of patterned master mediums for the conventional magnetic transfer to a plurality of magnetic recording mediums having a low coercive force. Therefore, it is possible to obtain a greater number of preformatted magnetic recording mediums from a single patterned master medium used in the processes according to the present invention than from a patterned master medium used in the conventional process.

(f) The magnetic reproduction system according to the fourth aspect of the present invention uses as a read-only medium a high-coercive-force magnetic recording medium to which data only for reading is transferred. Since the magnetic recording medium used in the magnetic reproduction system has a high coercive force, it is impossible to write data in the magnetic recording medium with the conventional magnetic head, and therefore it is possible to prevent occurrence of problems such as overwriting by error. Conventionally, write protection in read-only mediums is realized, for example, by software, or arrangement of a detection hole in a cartridge. However, if the downsizing of the mediums proceeds in the future, the arrangement of the detection hole is likely to become difficult. In addition, when the write protection is realized by software or arrangement of a detection hole, data can be erroneously deleted by omission of the write protection. On the other hand, when a high-coercive-force magnetic recording medium in which a magnetic pattern is recorded by magnetic transfer is used as a read-only medium, no data can be written in such a magnetic recording medium by using the currently available magnetic head technology, and therefore the data written in the high-coercive-force magnetic recording medium cannot be erroneously deleted by error.

DESCRIPTION OF THE DRAWINGS

FIG. 1 is a schematic perspective view of an essential portion of a magnetic transfer system according to the first embodiment of the present invention which is arranged to perform magnetic transfer.
FIGS. 2A, 2B, and 2C are cross-sectional views of a magnetic recording medium and/or a patterned master medium in the first, second, and final stages of a horizontal (inplane) magnetic transfer process for magnetically transferring information to the magnetic recording medium according to the first and second embodiments of the present invention.

DESCRIPTION OF PREFERRED EMBODIMENTS

Embodiments of the present invention are explained in detail below with reference to drawings. In the drawings, elements are illustrated schematically, and the dimensions of the illustrations are different from the dimensions of the elements of actual systems.

First Embodiment

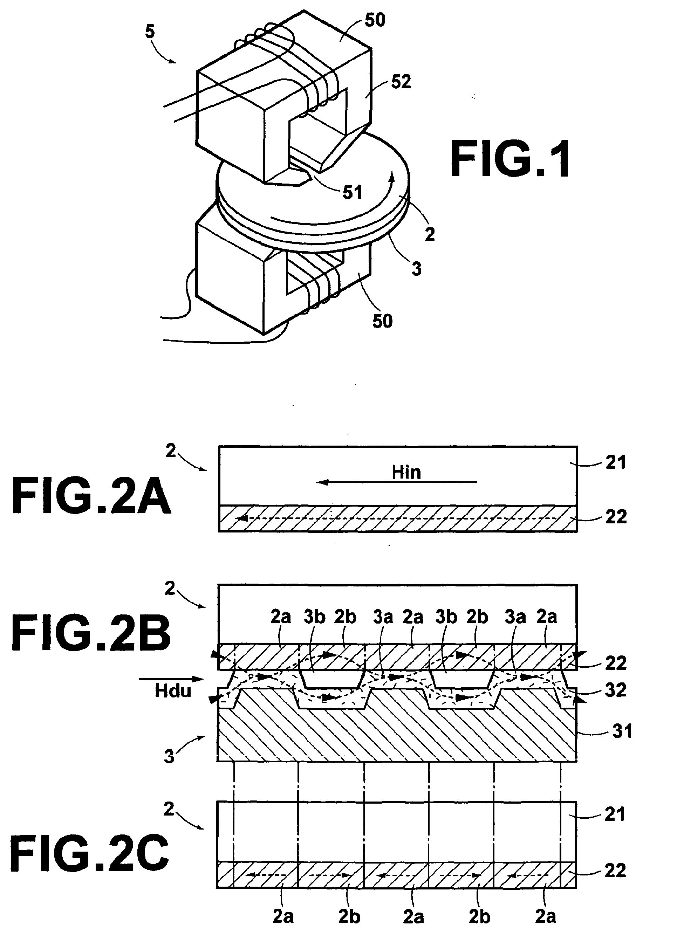

FIG. 1 is a schematic perspective view of an essential portion of a magnetic transfer system according to the first embodiment of the present invention which is arranged to perform magnetic transfer.

The magnetic transfer to a magnetic recording medium 2 having a magnetic recording side is performed as follows.

First, initial DC magnetization is performed on the magnetic recording medium 2 as explained in detail later.

Next, the magnetic recording medium 2 and a patterned master medium 3 having a patterned side (information-carrying side) are held in the magnetic transfer system 1 illustrated in FIG. 1 in such a manner that the magnetic recording side of the magnetic recording medium 2 and the patterned side of the patterned master medium 3 are in close contact and pressed against each other with predetermined pressure, where at least a portion of the patterned side is formed of a soft-magnetic material.

Then, the magnetic-field generation unit 5 applies a magnetic field to the magnetic recording medium while holding the magnetic recording medium 2 and the patterned master medium 3 as above, so that a magnetic pattern representing servo signals and the like is transferred to the magnetic recording medium 2.

FIGS. 2A, 2B, and 2C are cross-sectional views of a magnetic recording medium and/or a patterned master medium in the first, second, and final stages of a horizontal (inplane) magnetic transfer process for magnetically transferring information to the magnetic recording medium according to the first and second embodiments of the present invention.

In particular, FIG. 2A shows a cross section of the magnetic recording medium 2 used in the first and second embodiments of the present invention. As illustrated in FIG. 2A, the magnetic recording medium 2 according to the present invention has a disklike shape, and comprises a support 21 and a magnetic recording layer 22 (magnetic layer) formed on at least one side of the support 21. In the first embodiment, the magnetic recording layer 22 has a coercive force Hc of 239 kA/m ($\approx$3,000 Oe) or greater and a coercivity squareness ratio Hc* of 0.4 to 0.9 (preferably 0.6 to 0.8), and realizes a recording density corresponding to a bit length of 60 nm or smaller. In addition, although not shown, a protection layer having a thickness of 3 nm or greater is formed on the magnetic recording layer 22 of the magnetic recording medium 2, and a lubricant is applied to the protection layer.

Further, before the magnetic recording medium 2 is brought into contact with the patterned master medium 3, initial magnetization of the magnetic recording medium 2 is performed by using an initial magnetization unit (not shown) and applying to the magnetic recording medium 2 an initial DC magnetic field directed along a track direction. The initial magnetization unit has a similar construction to the magnetic-field generation unit 5 illustrated in FIG. 1.

Then, a magnetic field for magnetic transfer, which is directed opposite to the direction of the initial DC magnetic field, is applied to the magnetic recording medium 2 while holding the magnetic recording medium 2 and the patterned master medium 3 in close contact with each other, so that a magnetic pattern corresponding to the pattern formed in the patterned side of the patterned master medium 3 is formed by magnetization inversion in the magnetic recording medium 2.

The magnetic recording medium 2 is a disklike magnetic recording medium, for example, a hard disk, or a high-density flexible disk, and the magnetic recording layer 22 is realized by an applied-type magnetic recording layer using ultrafine particles of FePt, fine particles of barium ferrite, or the like, or a sputtered-type magnetic recording layer containing a TbFeCo-based magnetic layer.

In addition, in the case of a magnetic recording medium having a metal-thin-film type magnetic recording layer, Co, Co alloys, Fe, and Fe alloys can also be used as a magnetic material, where the Co alloys include CoPtCr, CoCr, CoPtCrB, CoPtCrTa, CoPtCrNbTa, CoCrB, CoNi, Co/Pd, and the like, and the Fe alloys include FeCo, FePt, FeCoNi, and the like. In order to realize clear magnetic transfer, it is preferable that the magnetic layer be able to realize great magnetic flux density, and exhibit inplane magnetic anisotropy in the case of inplane recording or vertical magnetic anisotropy in the case of vertical recording. The thickness of the magnetic layer is preferably 10 to 500 nm, and more preferably 10 to 50 nm.

In addition, it is preferable that a nonmagnetic primer layer be arranged under the magnetic layer (i.e., on the support side of the magnetic layer) so that the magnetic layer has a necessary degree of magnetic anisotropy. Although the nonmagnetic primer layer can be formed by using Cr, CrTi, CrV, CoCr, CrTa, CrMo, NiAl, Ru, Pd, or the like, it is necessary to choose a material having a crystal structure and a lattice constant which match with the magnetic layer. The thickness of the nonmagnetic primer layer is preferably 5 to 150 nm, and more preferably 20 to 80 nm.

Further, in the case of vertical recording, it is possible to arrange a soft-magnetic backing layer under the nonmagnetic primer layer in order to stabilize the vertical magnetic condition of the magnetic layer and increase the sensitivity in reproducing recorded data. The soft-magnetic backing layer can be formed by using NiFe, CoCr, FeTaC, FeAlSi, or the like. The thickness of the soft-magnetic backing layer is preferably 20 to 2,000 nm, and more preferably 60 to 400 nm.

In the case where the magnetic recording medium 2 is a hard disk, the support 21 is preferably realized by a glass substrate or an aluminum substrate. In the case where the magnetic recording medium 2 is a high-density flexible disk, the support 21 is preferably a film of polyester such as polyethylene terephthalate or polyethylene naphthalate.

The patterned master medium 3 is formed of a substrate 31 and a magnetic (soft-magnetic) layer 32, and has a disklike shape and a patterned side on which a relief or recess pattern is formed for magnetic transfer. Specifically, in the example illustrated in FIG. 2B, the relief or recess pattern is realized by forming a relief or recess base pattern on one side of the substrate 31, and then covering the relief or recess base pattern with the magnetic layer 32. Details of the formation of the relief or recess pattern are explained later.

The magnetic-field generation unit 5 comprises a medium-holding unit and electromagnets 50. The medium-holding unit holds the magnetic recording medium 2 and the patterned master medium 3 in close contact. The electromagnets 50 have gaps 51, and are arranged on the upper and lower sides of the magnetic recording medium 2 and the patterned master medium 3 held by the medium-holding unit in such a manner that the gaps 51 extend in the radial direction of the magnetic recording medium 2 and the patterned master medium 3. In the stage of applying a magnetic field, the magnetic field for magnetic transfer is applied by the magnetic-field generation unit 5 to the magnetic recording medium 2 while integrally rotating the magnetic recording medium 2 and the patterned master medium 3 so that the information carried by the patterned master medium 3 is magnetically transferred to and recorded at the magnetic recording side of the magnetic recording medium 2. Alternatively, it is possible to rotate the magnetic-field generation unit 5 instead of rotating the magnetic recording medium 2 and the patterned master medium 3.

Further, it is possible to arrange the magnetic-field generation unit 5 on only one side of the set of the magnetic recording medium 2 and the patterned master medium 3 held by the medium-holding unit. Furthermore, one or more permanent magnets may be used instead of the electromagnets 50.

Hereinbelow, a process for magnetically transferring information from the patterned master medium 3 to the magnetic recording medium 2 according to the first embodiment is explained in detail with reference to FIGS. 2A, 2B, and 2C, which are cross-sectional views of a magnetic recording medium and/or a patterned master medium in the first, second, and final stages of a horizontal (inplane) magnetic transfer process for magnetically transferring information to the magnetic recording medium according to the first and second embodiments of the present invention.

FIG. 2A shows a cross section of the magnetic recording medium 2 in the first stage of the process according to the second embodiment. As illustrated in FIG. 2A, in the first stage, initial DC magnetization of the magnetic recording medium 2 is performed (i.e., the magnetic recording medium 2 is DC demagnetized) by applying an initial DC magnetic field Hin directed in a direction along a track of the magnetic recording medium 2.

FIG. 2B shows a cross section of the magnetic recording medium 2 and the patterned master medium 3 in the second stage of the process according to the second embodiment. As illustrated in FIG. 2B, in the second stage, the magnetic recording medium 2 and the patterned master medium 3 are held in such a manner that the magnetic layer 32 of the magnetic recording medium 2 is in close contact with the patterned side of the patterned master medium 3. As mentioned before, the patterned side is formed by forming a relief or recess base pattern on one side of the substrate 31, and then covering the relief or recess base pattern with the magnetic layer 32. Then, a magnetic field Hdu directed opposite to the initial magnetic field Hin is applied to the magnetic recording medium 2 while holding the magnetic recording medium 2 and the patterned master medium 3 in close contact.

At this time, as indicated by the arrows in FIG. 2B, the magnetic flux produced by the application of the above magnetic field Hdu is drawn in the magnetic layer 32 in the regions at which the magnetic layer 32 is in contact with the magnetic recording layer 22. Therefore, the initial magnetization in the portions 2a of the magnetic recording layer 22 which are in contact with the protruding portions 3a of the magnetic layer 32 is not inverted by the application of the above magnetic field Hdu. On the other hand, a substantial portion of the magnetic flux produced by the application of the above magnetic field Hdu passes through the portions 2b of the magnetic recording layer 22 which are located above the recessed portions 3b of the magnetic layer 32 and are not in contact with the magnetic layer 32.

Therefore, the initial magnetization in the portions 2b of the magnetic recording layer 22 which are not in contact with the magnetic layer 32 is inverted by the application of the above magnetic field Hdu. FIG. 2C shows the states of magnetization in a cross section of the magnetic recording medium 2 in the final stage (after the magnetic transfer is completed). As indicated by the arrows in FIG. 2C, a magnetic pattern corresponding to the relief or recess pattern formed on the patterned side of the patterned master medium 3 is recorded in the magnetic recording layer 22 of the magnetic recording medium 2.

Although, in the example explained above, it is assumed that the positive pattern is formed on one side of the substrate 31 as illustrated in FIG. 2B, it is possible to form a negative pattern instead of the relief (positive) pattern. In this case, a magnetic pattern similar to that recorded in the above example can be recorded in the magnetic recording medium 2 by inverting the directions of the initial magnetic field Hin and the magnetic field Hdu for magnetic transfer.

As explained above, it is possible to form a high-quality magnetic pattern in the magnetic recording medium 2 having a great coercive force by magnetic transfer using the patterned master medium 3. In addition, the magnetic recording medium 2 in which the magnetic pattern is formed as above can also be used as a master disk for the conventional magnetic transfer as mentioned before.

Further, it is possible to arrange magnetic recording layers on both sides of the magnetic recording medium 2. In this case, magnetic transfer to each of the magnetic recording layers can be performed one after the other, or magnetic transfer to both the magnetic recording layers can be concurrently performed by holding the two patterned master mediums in contact with the magnetic recording layers.

Second Embodiment

In the process for magnetically transferring information from a patterned master medium 3 to a magnetic recording medium 2 according to the second embodiment, a magnetic transfer system similar to the magnetic transfer system 1 illustrated in FIG. 1 is used. However, the process according to the second embodiment is different from the process according to the first embodiment in the following features.

(1) The magnetic recording layer 22 has a coercivity squareness ratio Hc* of 0.4 to 0.9 (preferably 0.6 to 0.8) and a coercive force Hc of 398 kA/m ($\approx$5,000 Oe) or greater, and the bit length of the relief or recess pattern formed on the patterned side of the magnetic layer 32 is 55 nm or smaller.
(2) The magnetic field for magnetic transfer is applied while the magnetic recording layer 22 is heated to 100°C or higher.

(3) A protection layer having a thickness of 3 nm or greater is formed on the magnetic recording layer 22 of the magnetic recording medium 2, and a lubricant is applied to the protection layer when necessary.

As indicated above, according to the second embodiment, it is possible to realize magnetic transfer to a magnetic recording layer 22 having a coercive force higher than the magnetic recording layer 22 in the first embodiment.

Hereinbelow, the process according to the second embodiment is explained in detail with reference to FIGS. 2A, 2B, and 2C.

First, initial DC magnetization of the magnetic recording medium 2 is performed (i.e., the magnetic recording medium 2 is DC demagnetized) by applying an initial DC magnetic field Hin directed in a direction along a track of the magnetic recording medium 2, as illustrated in FIG. 2A (i.e., as in the first embodiment).

Thereafter, the magnetic recording medium 2 is heated to 100 °C or higher, so that the coercive force Hc of the magnetic recording layer 22 decreases.

Then, as illustrated in FIG. 2B, the patterned master medium 3 is brought into contact with the magnetic recording medium 2 in such a manner that the magnetic layer 32 of the magnetic recording medium 2 is brought into close contact with the patterned side of the patterned master medium 3. As mentioned before, the patterned side is formed by forming a relief or recess base pattern on one side of the substrate 31, and then covering the relief or recess base pattern with the magnetic layer 32. Therefore, when the patterned master medium 3 is brought into contact with the magnetic recording medium 2 as above, the heat of the portions 2a of the magnetic recording layer 22 which are in contact with the protruding portions 3a of the magnetic layer 32 escape through the protruding portions 3a into the patterned master medium 3, so that the temperature of the portions 2a of the magnetic recording layer 22 is lowered, and the high coercive force Hc which the portions 2a of the magnetic recording layer 22 initially has is recovered. On the other hand, since the temperature of the portions 2b of the magnetic recording layer 22 which are located above the recessed portions 3b of the magnetic layer 32 remains high, the coercive force Hc of the portions 2b of the magnetic recording layer 22 remains low, and therefore the magnetization of the portions 2b of the magnetic recording layer 22 is likely to be inverted. That is, in the magnetic recording layer 22, the temperature of the portions 2b the magnetization of which is to be inverted is higher than the temperature of the portions 2a the magnetization of which is not to be inverted.

While the magnetic recording medium 2 and the patterned master medium 3 are held in the above condition, a magnetic field Hdu directed opposite to the initial magnetic field Hin is applied to the magnetic recording medium 2 so that the information carried by the patterned master medium 3 is magnetically transferred to the magnetic recording medium 2. Specifically, as indicated by the arrows in FIG. 2B, the magnetic flux produced by the application of the above magnetic field Hdu is drawn in the magnetic layer 32 in the regions at which the magnetic layer 32 is in contact with the magnetic recording layer 22, and the coercive force Hc of the protruding portions 3a of the magnetic layer 32 is high. Therefore, the initial magnetization in the portions 2a of the magnetic recording layer 22 which are in contact with the protruding portions 3a of the magnetic layer 32 is not inverted by the application of the above magnetic field Hdu. On the other hand, a substantial portion of the magnetic flux produced by the application of the above magnetic field Hdu passes through the portions 2b of the magnetic recording layer 22 which are located above the recessed portions 3b of the magnetic layer 32 and are not in contact with the magnetic layer 32, and the coercive force Hc of the portions 2b of the magnetic recording layer 22 is low. Therefore, the initial magnetization in the portions 2b of the magnetic recording layer 22 is inverted by the application of the above magnetic field Hdu. Thus, as indicated by the arrows in FIG. 2C, a magnetic pattern corresponding to the pattern formed on the patterned side of the patterned master medium 3 is recorded in the magnetic recording layer 22 of the magnetic recording medium 2. In particular, according to the second embodiment, very small bits can be clearly transferred, and the quality of the magnetic transfer is high.

According to the second embodiment, since the magnetic recording medium 2 has a high coercive force Hc at the low (normal) temperature, it is not easy to invert the magnetization of the portions 2a of the magnetic recording layer 22 which are in contact with the protruding portions 3a of the magnetic layer 32 even when a high magnetic field is applied. Therefore, it is possible to ensure the linearity of the boundaries of recorded bits, and reduce noise. In particular, the process according to the second embodiment is suitable for recording information with the bit length of 55 nm or smaller, and can realize high-density recording.

Patterned Master Medium

Hereinbelow, details of the patterned master medium 3 used in the present invention are explained.

The substrate 31 constituting the patterned master medium 3 can be made of Ni, Si, quartz, glass, aluminum, ceramics, synthetic resin, or the like. In particular, It is preferable that the substrate 31 be made of Ni or an alloy containing Ni as a main component.

The magnetic materials which can be used as a constituent of the magnetic layer 32 are Co, Co alloys, Fe, Fe alloys, Ni, and Ni alloys. The Co alloys include CoNi, CoNiZr, CoNbTaZr, and the like, the Fe alloys include FeCo, FeCoNi, FeNiMo, FeAlSi, FeAl, FeTaN, and the like, and the Ni alloys include NiFe. In particular, the FeCo and FeCoNi are preferable, and Fe70Co30 is most preferable. In addition, when the magnetic layer 32 formed on the substrate 31 is made of one or more materials having a small coercive force, such as soft-magnetic materials or semihard magnetic materials, the quality of the magnetic transfer is further improved. Further, It is preferable that the soft-magnetic layer 32 have a saturation magnetization value higher than the substrate 31.

The patterned master medium 3 can be obtained by producing a first mold having on one side a relief or recess pattern (either positive or negative) corresponding to a signal pattern, and electroforming metal on the first mold so as to produce a metallic plate having on one side a relief or recess pattern.

The first mold can be produced by using photolithography or the like. In the following explanations, it is assumed that the first mold is produced by using a silicon wafer, although a quartz plate or a glass plate can be used instead of the silicon wafer.

First, an electron-beam-resist layer is formed on a silicon wafer having a disklike shape and a smooth surface by spin coating or the like. Then, the electron-beam-resist layer on the silicon wafer is irradiated with an electron beam which is modulated in correspondence with the above signal pattern while rotating the coated silicon wafer so that a pattern corresponding to the signal pattern is exposed in the electron-beam-resist layer. For example, in the case where the signal pattern indicates servo signals used in a magnetic disk system, the pattern exposed in the electron-beam-resist layer includes pattern elements corresponding to the servo signals, being arranged in a plurality (e.g., 200) of sectors at regular intervals on a great number (e.g., tens of thousands) of tracks, and extending in the radial directions. When the exposure of the entire area of the electron-beam-resist layer is completed, the electron-beam-resist layer is developed, and the portions of the electron-beam-resist layer except for the exposed portions are removed. Thus, a silicon wafer having protrusions and recesses on one side is obtained as the first mold, where the protrusions are realized by the exposed portions of the electron-beam-resist layer (which remain after the above removal), and the recesses are located between the protrusions, and the silicon wafer is exposed at the bottom of each of the recesses.

Then, a first original disk is produced by electroforming metal on the first mold. Specifically, nickel is electroplated on the first mold to a thickness .sufficiently greater than the height of the protrusions which the first mold has, so as to form a first Ni plate. When necessary, a thin conductive film of a metal such as nickel or silver is formed by sputtering, evaporation, or electroless plating before the nickel electroforming. After the electroforming, the first Ni plate is detached from the first mold. The detached, first Ni plate has on one side a relief or recess pattern corresponding to the pattern exposed in the electron-beam-resist layer (i.e., corresponding to the aforementioned servo signals). It is possible to use the first Ni plate as the patterned master medium. Alternatively, the patterned master medium may be obtained by forming on the relief or recess pattern of the first Ni plate the aforementioned soft-magnetic layer and protection layer in this order.

As a first alternative, it is possible to form a second Ni plate (having a relief or recess pattern on one side) as another patterned master medium by electroforming metal on the first original disk as a mold. Hereinafter, the first original disk may also be referred to as the second mold. It is possible to use the second Ni plate as the patterned master medium. Hereinafter, this patterned master medium is also referred to as the second original disk. Alternatively, the patterned master medium may be obtained by forming on the relief or recess pattern of the second Ni plate the aforementioned soft-magnetic layer and protection layer in this order. In this case, It is preferable that the first mold be produced by either of the following ways (1) and (2).

   (1) The aforementioned electron-beam-resist layer is made of a negative type resist, and the electron beam applied to the electron-beam-resist layer is modulated so as to expose in the electron-beam-resist layer a pattern constituted by pattern elements corresponding the servo signals.
   (2) The aforementioned electron-beam-resist layer is made of a positive type resist, and the electron beam applied to the electron-beam-resist layer is modulated so as to expose in the electron-beam-resist layer the inversion of the above pattern constituted by pattern elements corresponding the servo signals.

The first alternative is advantageous that more than one second original disk (more than one patterned master medium) can be produced by using the first original disk (the second mold) as a mold.

As a second alternative, another patterned master medium can be produced by forming a resin disk having a relief or recess pattern on one side, and forming on the relief or recess pattern of the resin disk the aforementioned soft-magnetic layer and the protection layer in this order, where the resin disk is formed by using a stamping technique in which the second original disk is used as a stamper.

As a third alternative, it is possible to produce a third mold by selectively etching the exposed areas of the silicon wafer on the patterned side of the first mold by use of the protrusions (formed of the electron-beam resist) as a mask, and thereafter removing the protrusions. Thus, in the third mold, a relief or recess pattern is formed by the etching on one side of the silicon wafer. Then, a third Ni plate having a relief or recess pattern on one side is produced by electroforming using the third mold in a similar manner to the electroforming of the first Ni plate. It is possible to use the third Ni plate as the patterned master medium. That is, this patterned master medium can be used as a third original disk. Alternatively, the patterned master medium may be obtained by forming on the relief or recess pattern of the third Ni plate the aforementioned soft-magnetic layer and protection layer in this order. In addition, the third alternative is also advantageous that more than one patterned master medium can be produced by using the third mold.

The height of the protrusions (or the depth of the recesses) constituting the relief or recess pattern of the patterned master medium 3 is preferably 50 to 800 nm, and more preferably 80 to 600 nm. In the case where the relief or recess pattern indicates the servo signals, protrusions each having a rectangular shape elongated in the radial direction are formed on the patterned master medium 3.

The soft-magnetic layer can be formed on the relief or recess pattern of the substrate by using a vacuum film-formation technique (e.g., vacuum evaporation, sputtering, or ion plating), a plating technique (e. g., electroplating or electroless plating), or the like. The thickness of the soft-magnetic layer (which is arranged, for example, on the tops of the protrusions) is preferably 50 to 500 nm, and more preferably 80 to 300 nm.

In addition, It is preferable to arrange a protection layer being made of carbon, diamond-like carbon (DLC), or the like and having a thickness of 3 to 30 nm, on the soft-magnetic layer arranged on the tops of the protrusions. Further, it is possible to arrange a lubricant layer. Furthermore, a contact-support layer made of silicon or the like may be arranged between the soft-magnetic layer and the protection layer. In the case where the lubricant layer is arranged, it is possible to suppress production of flaws by friction which occurs during correction of misalignment between the patterned master medium and a slave medium in contact with the patterned master medium, and improve the durability of the patterned master medium.

Additional Matter

In addition, all of the contents of the Japanese patent application No. 2004-176885 are incorporated into this specification by reference.

**Claims**

1.   A magnetic recording medium comprising a magnetic recording layer (22) in which patterned information is recorded by magnetic transfer by applying a magnetic field to the magnetic recording layer (22) while holding the magnetic recording medium and a patterned master medium (3) having a patterned side on which an original pattern corresponding to the patterned information is formed, in such a manner that portions of the patterned side which constitute the original pattern are in close contact with the magnetic recording layer (22), where said portions (32) of the patterned side are made of a soft-magnetic material;

   **characterized in that**
   said magnetic recording layer (22) has a coercivity squareness ratio of 0.4 to 0.9; and
   said the original pattern has a bit length of 60 nm or smaller.

2.   A magnetic recording medium according to claim 1, wherein said magnetic recording layer (22) has a coercive force of 239 kA/m or greater.

3.   A process according to either one of claims 1 and 2, further comprising a protection layer which has a thickness of 3 nm or greater, and formed on a surface of the magnetic recording layer (22).

4.   A process for producing a magnetic recording medium in which patterned information is recorded, including the steps of,

   (a) holding an unrecorded magnetic recording medium containing a magnetic recording layer (22) with a coercive force of 398 kA/m or greater, and a patterned master medium (3) having a side on which a relief or recess pattern corresponding to said patterned information and being constituted by protrusions is formed for magnetic transfer, in such a manner that the protrusions are in close contact with the magnetic recording layer (22), where at least tops (32) of said protrusions are formed of a soft-magnetic material, and
   (b) applying a magnetic field to said unrecorded magnetic recording medium while holding the unrecorded magnetic recording medium and the patterned master medium (3) in such a manner that the protrusions are in close contact with the magnetic recording layer (22) , and the patterned information is recorded in the magnetic recording layer (22) by magnetic transfer, where said portions (32) of the patterned side are made of a soft-magnetic material;

   **characterized in that**
   said relief or recess pattern is formed with a bit length of 55 nm or smaller;
   said magnetic recording layer (22) has a coercivity squareness ratio of 0.4 to 0.9;
   said process further comprises the step of (c) heating the magnetic recording layer (22) to 100°C or higher before performing said step (b); and
   in said step (b), the magnetic recording layer (22) is maintained at 100°C or higher.

5.   A process according to claim 4, wherein said unrecorded magnetic recording medium comprises a protection layer which has a thickness of 3 nmor greater, and formed on a surface of saidmagnetic recording layer (22).

6. A process for producing a magnetic recording medium in which patterned information is recorded, including the steps of,

(a) holding an unrecorded magnetic recording medium containing a magnetic recording layer (22) with a coercive force of 398 kA/m or greater, and a patterned master medium (3) having a side on which a relief or recess pattern corresponding to said patterned information and being constituted by protrusions is formed for magnetic transfer, in such a manner that the protrusions are in close contact with the magnetic recording layer (22), where at least tops (32) of said protrusions are formed of a soft-magnetic material, and
(b) applying a magnetic field to said unrecorded magnetic recording medium while holding the unrecorded magnetic recording medium and the patterned master medium (3) in such a manner that the protrusions are in close contact with the magnetic recording layer (22), and the patterned information is recorded in the magnetic recording layer (22) by magnetic transfer, where said portions (32) of the patterned side are made of a soft-magnetic material;

**characterized in that**
said relief or recess pattern is formed with a bit length of 55 nm or smaller;
said magnetic recording layer (22) has a coercivity squareness ratio of 0.4 to 0.9; and
said process further comprises the step of (b) heating the magnetic recording layer (22) to 100°C or higher before performing said step (a).

7. A process according to claim 6, wherein first portions of said magnetic recording layer (22) in which magnetization inversion occurs are at higher temperature than second portions of the magnetic recording layer (22) in which magnetization inversion does not occur.

8. A process according to either one of claims 4 and 6, further comprising the step of (a1) performing initial magnetization of said magnetic recording layer (22) in such a manner that the magnetic recording layer (22) is DC magnetized in a direction along a track, wherein said magnetic field applied in said step (b) is directed approximately opposite to the direction of the initial magnetization so that the initial magnetization in first portions of the magnetic recording layer (22) is inverted, and said patterned information is recorded as a magnetic pattern in the magnetic recording layer (22), and the first portions of the magnetic recording layer (22) are located between second portions of the magnetic recording layer (22) at which the magnetic recording layer (22) is in close contact with the protrusions.

9. A magnetic reproduction system in which said magnetic recording medium according to claim 1 is used as a read-only medium.

FIG.1

FIG.2A

FIG.2B

FIG.2C

# EP 1 610 303 A1

**European Patent Office**

## EUROPEAN SEARCH REPORT

Application Number

EP 05 01 2868

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 278 186 A (FUJI PHOTO FILM CO., LTD) 22 January 2003 (2003-01-22) | 1-3 | G11B5/86 |
| Y | * paragraph [0009] * <br> * paragraph [0014] - paragraph [0016] * <br> * the whole document * <br> ----- | 4-9 | |
| X | EP 0 915 456 A (MATSUSHITA ELECTRIC INDUSTRIAL CO., LTD) 12 May 1999 (1999-05-12) | 1-3 | |
| Y | * paragraph [0021] - paragraph [0023] * <br> * claims 48,53,54,63 * <br> * the whole document * <br> ----- | 4-9 | |
| X | US 2003/035235 A1 (IKEDA HIROYUKI ET AL) 20 February 2003 (2003-02-20) * paragraph [0014] * | 1-3 | |
| A | * paragraph [0258] - paragraph [0260] * <br> * the whole document * <br> ----- | 4-9 | |
| A | US 2003/008176 A1 (KOUJIMA JUN ET AL) 9 January 2003 (2003-01-09) * paragraph [0071] * * paragraph [0073] * * the whole document * ----- | 1,2,4,6 | **TECHNICAL FIELDS SEARCHED (Int.Cl.7)** <br><br> G11B |
| A | US 5 004 652 A (LAL ET AL) 2 April 1991 (1991-04-02) * figure 5b * * the whole document * ----- | 1,4,6 | |
| A | PATENT ABSTRACTS OF JAPAN vol. 005, no. 161 (P-084), 16 October 1981 (1981-10-16) & JP 56 090433 A (KOKUSAI DENSHIN DENWA CO LTD <KDD>), 22 July 1981 (1981-07-22) * abstract * ----- | 4,6 | |

-/--

The present search report has been drawn up for all claims

| Place of search | Date of completion of the search | Examiner |
|---|---|---|
| The Hague | 22 September 2005 | Malagoli, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

**European Patent Office**

## EUROPEAN SEARCH REPORT

Application Number

EP 05 01 2868

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 276 127 A (KABUSHIKI KAISHA TOSHIBA) 27 July 1988 (1988-07-27) * the whole document * ----- | 4,6 | |

TECHNICAL FIELDS SEARCHED (Int.Cl.7)

The present search report has been drawn up for all claims

| Place of search | Date of completion of the search | Examiner |
|---|---|---|
| The Hague | 22 September 2005 | Malagoli, M |

EPO FORM 1503 03.82 (P04C01)

**ANNEX TO THE EUROPEAN SEARCH REPORT
ON EUROPEAN PATENT APPLICATION NO.** EP 05 01 2868

This annex lists the patent family members relating to the patent documents cited in  the above-mentioned European search report.
The members are as contained in the European Patent Office EDP file on
The European Patent Office is in no way  liable for these particulars which are merely  given for the purpose of information.

22-09-2005

| Patent document cited in search report | | Publication date | Patent family member(s) | | Publication date |
|---|---|---|---|---|---|
| EP 1278186 | A | 22-01-2003 | CN | 1397933 A | 19-02-2003 |
| | | | DE | 60204190 D1 | 23-06-2005 |
| | | | SG | 106080 A1 | 30-09-2004 |
| | | | US | 2003026026 A1 | 06-02-2003 |
| EP 0915456 | A | 12-05-1999 | CN | 1474381 A | 11-02-2004 |
| | | | CN | 1474382 A | 11-02-2004 |
| | | | CN | 1474383 A | 11-02-2004 |
| | | | CN | 1485817 A | 31-03-2004 |
| | | | CN | 1474384 A | 11-02-2004 |
| | | | CN | 1216624 A | 12-05-1999 |
| | | | ID | 17855 A | 29-01-1998 |
| | | | WO | 9803972 A1 | 29-01-1998 |
| | | | US | 6347016 B1 | 12-02-2002 |
| US 2003035235 | A1 | 20-02-2003 | SG | 103878 A1 | 26-05-2004 |
| US 2003008176 | A1 | 09-01-2003 | NONE | | |
| US 5004652 | A | 02-04-1991 | JP | 4228105 A | 18-08-1992 |
| JP 56090433 | A | 22-07-1981 | JP | 1332402 C | 28-08-1986 |
| | | | JP | 60057133 B | 13-12-1985 |
| EP 0276127 | A | 27-07-1988 | DE | 3869790 D1 | 14-05-1992 |
| | | | JP | 63177317 A | 21-07-1988 |
| | | | KR | 9102986 B1 | 11-05-1991 |
| | | | US | 5032931 A | 16-07-1991 |

EPO FORM P0459

For more details about this annex : see Official Journal of the European Patent Office, No. 12/82